# FASCICULE DE BREVET EUROPEEN

(11) **EP 3 173 308 B1**
(45) Date de publication et mention de la délivrance du brevet: **29.08.2018**
(21) Numéro de dépôt: 16203516.6
(22) Date de dépôt: 03.07.2009
(51) Int. Cl.: B62B 7/08, B62B 7/06

(54) **POUSSETTE PLIABLE**
ZUSAMMENKLAPPBARER KINDERWAGEN
FOLDABLE PUSHCHAIR

(30) Priorité: 04.07.2008 FR 0854570
(43) Date de publication de la demande: 31.05.2017
(62) Demande divisionnaire de: 13183585.2
(73) Titulaire: BABYZEN, 13100 Aix-en-Provence (FR)
(72) Inventeur: HENRY, Gilles, 75016 Paris (FR)
(74) Mandataire: Osha Liang

(56) Documents cités:
- EP-A1- 2 307 257
- FR-A- 2 553 362
- JP-A- S49 113 366
- US-A1- 2004 222 615
- US-A1- 2005 098 983
- US-A1- 2007 132 207
- US-A1- 2007 246 916

## Description

La présente invention concerne une poussette pliable mobile entre une position déployée et une position repliée.

Dans l'art antérieur, il existe de nombreux types de poussettes pliables. Ces poussettes comprennent généralement un dossier, une assise montée articulée sur le dossier et trois ou quatre jambes, équipées de roulettes.

L'ergonomie d'une poussette pour enfant nécessite que la longueur du support longitudinal d'assise soit sensiblement inférieure à la hauteur du dossier, ainsi qu'à la hauteur des jambes. Aussi, en raisons des caractéristiques d'ergonomie mentionnées ci-dessus, les poussettes de l'art antérieur restent relativement encombrantes lorsqu'elles sont pliées, comme il sera démontré par la suite.

Par conséquent, les solutions de l'art antérieur ne sont pas pleinement satisfaisantes lorsqu'elles doivent s'adapter aux caractéristiques d'une poussette pour enfant.

La demande de brevet FR 2 553 362 illustre un exemple de poussette selon l'art antérieur. Ce document décrit une poussette pliable selon le preambule de la revendication 1. La poussette décrite dans ce document est relativement encombrante lorsqu'elle est dans sa position repliée. En effet, l'extrémité supérieure du guidon vient en vis-à-vis de l'extrémité avant du support d'assise et de l'extrémité supérieure de la jambe avant. Ainsi, en position repliée, la plus grande dimension de la poussette selon ce document correspond sensiblement à la longueur du guidon ce qui demeure relativement encombrant. En outre, dans ce document, les roues viennent sensiblement en vis-à-vis lorsque la poussette est repliée de sorte que la poussette en position repliée est relativement encombrante au niveau des roues.

L'invention a pour but de remédier à cet inconvénient en proposant une poussette ergonomique présentant un faible encombrement lorsqu'elle est en position repliée et dont les transformations de sa position déployée vers sa position repliée et inversement, soient simples.

À cet effet l'invention concerne une poussette pour enfant pliable mobile entre une position déployée et une position repliée, telle que définie dans la revendication 1 annexée.

La poussette pliable ainsi réalisée est compacte car sa plus grande dimension est sensiblement égale à la longueur du montant de dossier.

En effet, comme le bord supérieur du dossier vient, en position pliée, se superposer à l'extrémité avant du support d'assise, malgré les différences de dimension du support d'assise et du dossier, et que l'extrémité supérieure de la jambe avant, dont la longueur est inférieure à la hauteur du dossier, vient se positionner à proximité du bord supérieur du dossier, la plus grande dimension de la poussette en position pliée est alors la hauteur du dossier. Bien sûr, au sens de la présente description, on entend par hauteur de dossier la hauteur du dossier en tant que tel, sans prendre en compte un éventuel prolongement (par exemple un guidon qui serait monté sur le montant du dossier).

De manière avantageuse, la hauteur du dossier formant la plus grande dimension de la poussette en position pliée est sensiblement égale à la hauteur de la jambe arrière entre le moyen de roulement et l'intersection entre l'assise et le dossier, lorsque la poussette est en position déployée.

En outre, la poussette peut être facilement déplacée de sa position déployée à sa position repliée car les mouvements des jambes et du dossier sont réalisés conjointement lors d'une même étape.

En outre, les jambes avant et arrière se croisent lors du mouvement de la poussette vers sa position repliée de sorte que les moyens de roulement se trouvent répartis à chaque extrémité de la poussette en position repliée. Ainsi, en position repliée, les moyens de roulement de la jambe avant et de la jambe arrière ne se trouvent pas positionnés les uns contre les autres ce qui aurait pour effet d'augmenter l'encombrement de la poussette au niveau des moyens de roulement. De manière générale, cette cinématique particulière des jambes contribue en combinaison avec les autres caractéristiques de l'invention à la compacité de la poussette en position repliée.

Dans un mode de réalisation avantageux, l'extrémité arrière dudit support d'assise est articulée selon au moins deux degrés de liberté par rapport au montant de dossier. Ainsi, le support d'assise n'est pas montée pivotant sur le dossier mais articulé selon au moins deux degrés de liberté par rapport au dossier, de manière à permettre une superposition de l'extrémité avant du support d'assise avec l'extrémité supérieure du dossier, présentant une hauteur supérieure à la longueur du support d'assise.

Avantageusement, le siège comprend trois sous-ensembles ;
- le premier sous-ensemble comprend une tringlerie de dossier comportant un montant de dossier et une bielle longitudinale de dossier articulée par rapport au montant de dossier selon un axe de rotation transversal ;
- le second sous-ensemble comprenant la tringlerie arrière comportant au moins une jambe arrière et une bielle longitudinale arrière articulée par rapport à ladite jambe arrière selon un axe de rotation transversal ;
- le troisième sous-ensemble comprenant la tringlerie avant comportant au moins une jambe avant et une bielle longitudinale avant articulée par rapport à ladite jambe avant selon un axe de rotation transversal.

Le siège comprend en outre un système d'articulation arrière et un système d'articulation avant ;
- le système d'articulation arrière comportant au moins un pivot transversal pour les articulations relatives de la jambe arrière et de la bielle avant par rapport au montant de dossier;
- le système d'articulation avant comportant au moins un pivot transversal pour les articulations relatives de la bielle longitudinale de dossier et de la bielle arrière par rapport à la jambe avant et du support d'assise par rapport à la jambe avant.

En outre, l'extrémité avant du support d'assise est montée sur le système d'articulation avant. Selon l'invention, comme mentionné précédemment, le bord arrière du support d'assise est relié à un point de la tringlerie, mais n'est pas monté pivotant sur le montant de dossier.

Selon l'invention, le mouvement du siège entre ses positions déployée et repliée est simple car l'écartement ou le rapprochement des deux systèmes d'articulation avant et arrière le long d'un axe entraîne respectivement le repliement des jambes, du dossier et de l'assise, ou leur déploiement.

Dans un mode de réalisation de l'invention, le support d'assise est supporté par la bielle longitudinale arrière.

Avantageusement, le système d'articulation arrière prolonge le bas du dossier, et l'articulation du dossier avec ladite bielle longitudinale avant est située en dessous de l'assise lorsque la poussette est en position déployée.

Ainsi, la bielle longitudinale avant peut être fixée à une traverse fixée à la jambe avant et présentant une hauteur satisfaisante pour former un marchepied de la poussette.

Avantageusement, la tringlerie de la poussette présente au moins un moyen d'immobilisation de la poussette en position déployée, faisant coopérer un élément de l'assise (bielle arrière, montant d'assise ou assise) avec le dossier ou le système d'articulation arrière, dans une position de blocage.

Dans un second mode de réalisation :
- le système d'articulation avant et le système d'articulation arrière sont reliés par l'intermédiaire de moyens de guidage coulissant longitudinalement l'un par rapport à l'autre ; et
- le support d'assise est supporté par le système d'articulation avant.

La poussette pliable selon l'invention peut comporter trois ou quatre jambes.

Lorsque la poussette comporte quatre jambes, elle peut comporter une traverse entre les jambes avant. Dans ce cas, les jambes arrière seront avantageusement arquées afin de contourner la traverse en position pliée.

Dans un mode de réalisation préféré, le montant de dossier est prolongé par un montant de guidage. Le montant de guidage est articulé en rotation ou guidé en translation par rapport au montant de dossier. Ainsi, le dispositif de guidage n'augmente pas ou très faiblement l'encombrement de la poussette en position repliée.

Avantageusement, l'extrémité avant du support d'assise est fixée à l'extrémité supérieure de la jambe avant.

D'autres objets et avantages de l'invention apparaîtront au cours de la description qui suit, faite en référence aux dessins annexés, dans lesquels :
- les figures 1a et 1b sont des vues schématiques latérales d'un premier exemple d'art antérieur, en position déployée et repliée ;
- les figures 2a et 2b sont des vues schématiques latérales d'un deuxième exemple d'art antérieur, en position déployée et repliée ;
- la figure 3 est une vue latérale de principe d'une tringlerie d'une poussette pliable selon l'invention en position déployée ;
- la figure 4 est une vue latérale de principe d'une tringlerie d'une poussette pliable selon l'invention en position intermédiaire ;
- la figure 5 est une vue latérale de principe d'une tringlerie d'une poussette pliable selon l'invention en position repliée ;
- la figure 6 est une vue schématique latérale d'une tringlerie de poussette selon un premier mode de réalisation de l'invention en position déployée ;
- les figures 7 et 8 sont des vues schématiques latérales d'une tringlerie de poussette pliable selon le premier mode de réalisation, dans des positions intermédiaires ;
- la figure 9 est une vue schématique latérale d'une tringlerie de poussette pliable selon le premier mode de réalisation, en position repliée ;
- la figure 10 est une vue en perspective d'une poussette pliable illustrant le premier mode de réalisation, en position dépliée ;
- la figure 11 est une vue schématique latérale d'une tringlerie de poussette pliable selon un mode de réalisation qui ne fait pas partie de l'invention, en position déployée ;
- la figure 12 est une vue schématique latérale d'une tringlerie de poussette selon un mode de réalisation qui ne fait pas partie de l'invention, en position intermédiaire ; et
- la figure 13 est une vue schématique latérale d'une tringlerie de poussette pliable selon un mode de réalisation qui ne fait pas partie de l'invention, en position repliée.

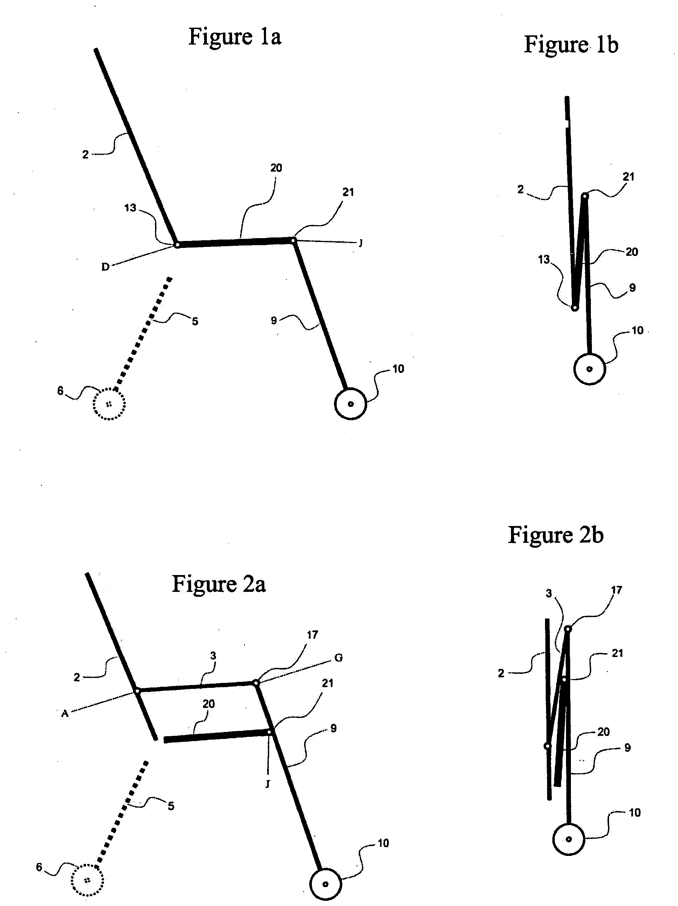

Les figures 1a et 1b illustrent le pliage d'une poussette selon un premier principe fréquemment rencontré dans l'art antérieur.

Lorsque la tringlerie de la poussette est considérée dans un plan latéral, elle est constituée notamment d'un montant de dossier 2, d'un support d'assise 20 et d'une jambe avant 9. Le support d'assise 20 est monté en rotation sur le montant de dossier 2 autour d'un axe D, ainsi que sur la jambe avant 9 autour d'un axe J.

En outre, la tringlerie de la poussette comporte une jambe arrière 5. Chacune des jambes 5, 9 est équipée d'un moyen de roulement 6, 10.

Afin d'obtenir un pliage à plat du siège (Fig. 1b), le support d'assise 20 vient se replier sur le montant de dossier 2, et la jambe avant 9 vient se replier contre le support d'assise 20.

On voit que ce premier type de structure ne permet pas d'obtenir un pliage très compact pour une poussette pour enfant. En effet, l'ergonomie d'une poussette pour enfant nécessite que la longueur du support longitudinal d'assise 20 soit sensiblement inférieure à la hauteur du montant de dossier 2, ainsi qu'à la hauteur de la jambe avant 9 (distance entre l'axe J et la roulette 10). En position pliée, le bord avant du support d'assise 20 se trouve donc replié sur un point éloigné de l'extrémité supérieure du montant de dossier 2. En conséquence, l'extrémité inférieure de la jambe avant 9 vient en déport du montant de dossier 2. La longueur totale de la poussette pliée est donc sensiblement plus grande que la hauteur du montant de dossier 2.

Les figures 2a et 2b illustrent le pliage d'une poussette selon un deuxième principe fréquemment rencontré dans l'art antérieur, parfois combiné au principe précédent.

Lorsque la tringlerie est considérée dans un plan latéral, elle est constituée notamment d'un montant de dossier 2, d'un support d'assise 20, d'une jambe avant 9 et d'un support d'accoudoir 3.

Le support d'accoudoir 3 est monté en rotation sur le montant de dossier 2 autour d'un axe A, ainsi que sur l'extrémité supérieure de la jambe avant 9 autour d'un axe G.

Le bord avant du support d'assise 20 est monté en rotation sur la jambe avant 9 autour d'un axe J, situé en-dessous de l'axe G. Le bord arrière du support d'assise 20 est fixé à un autre point non représenté de la tringlerie de la poussette.

La figure formée par le support d'accoudoir 3, le support d'assise 20, le montant de dossier 2 et la jambe avant 9 est un parallélogramme ou un pseudo-parallélogramme déformable.

En outre, la tringlerie du siège comporte une jambe arrière 5.

Lorsqu'il s'agit d'une poussette pour enfant, chacune des jambes 5, 9 est équipée d'une roulette 6, 10.

Afin d'obtenir un pliage à plat de la poussette (Fig. 2b), le support d'accoudoir 3 vient se replier sur le montant de dossier 2. Le support d'assise 20 ainsi que la jambe avant 9 viennent également se replier sensiblement en parallèle du montant de dossier 2.

On voit que ce deuxième type de structure ne permet pas non plus d'obtenir un pliage très compact pour une poussette pour enfant. En effet, même si le montant d'accoudoir 3 vient se replier sur l'extrémité supérieure du montant de dossier 2, le bord avant du support d'assise 20 se trouve une fois encore replié sur un point éloigné de cette extrémité du montant de dossier 2. En conséquence, l'extrémité inférieure de la jambe avant 9 vient en déport du montant de dossier 2, et la longueur totale de la poussette pliée est à nouveau sensiblement plus grande que la hauteur du montant de dossier 2.

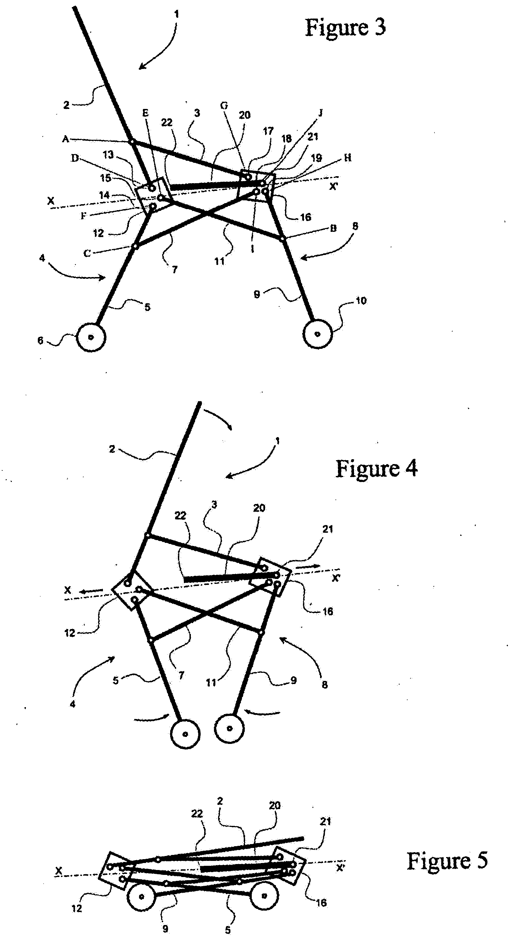

Afin de remédier à cet inconvénient, les Figures 3 à 5 illustrent le pliage d'une poussette autoporteuse adaptée pour le support et le déplacement d'un enfant, très compacte en position repliée.

Lorsque la tringlerie de la poussette est considérée dans un plan latéral, elle est constituée des trois sous ensembles 1, 4, 8 décrits ci-dessous.

Le premier sous-ensemble est constitué par une tringlerie de dossier 1 comportant un montant de dossier 2 et une bielle longitudinale 3 de dossier, le second sous-ensemble est constitué d'une tringlerie avant 8 comportant une jambe avant 9 et une bielle longitudinale avant 11 et le troisième sous-ensemble est constitué d'une tringlerie arrière 4 comportant une jambe arrière 5 et une bielle longitudinale arrière 7.

En outre, la tringlerie du siège comporte un support d'assise 20, qui peut être avantageusement rigide ou semi-rigide. Le support d'assise 20 présente une longueur sensiblement inférieure à la hauteur du dossier. La longueur de l'assise est inférieure à 70 % de la hauteur du dossier, de préférence inférieure à 60 % de la hauteur du dossier et de l'ordre de 55% de la hauteur du dossier.

On notera que selon l'invention, les jambes avant 9 et arrière 5 sont redressées et ne se croisent pas lorsque le siège est en position déployée.

On notera également que les jambes avant 9 et arrières 5 présentent une longueur sensiblement égale à la hauteur du dossier 2.

La bielle longitudinale 3 de dossier est montée en rotation sur le montant de dossier 2 autour d'un axe A. La bielle longitudinale 11 avant est montée en rotation par rapport à la jambe avant 9 autour d'un axe B. La bielle longitudinale arrière 7 est montée en rotation par rapport à la jambe arrière 5 autour d'un axe C.

Par ailleurs, la poussette comprend un système d'articulation avant et un système d'articulation arrière.

Le système d'articulation arrière comporte un support rigide arrière 12 qui porte une articulation 13 du montant de dossier 2 selon un axe de rotation D, une articulation 15 de la bielle avant 11 selon un axe de rotation E et une articulation 14 de la jambe arrière 5 selon un axe de rotation F.

Le système d'articulation avant comporte un support rigide avant 16 qui porte une articulation 17 de la bielle de dossier 3 selon un axe de rotation G, une articulation 19 de la jambe avant 9 selon un axe de rotation H, une articulation 18 de la bielle arrière 7 selon un axe de rotation I et une articulation 21 du support d'assise 20 selon un axe de rotation J. L'articulation 19 est située à l'extrémité supérieure de la jambe avant 9. Le support d'assise 20 est donc fixé à la jambe avant 9, à proximité de l'extrémité supérieure de celle-ci. En d'autres termes, la jambe avant 9 est montée articulée sur le système d'articulation avant à proximité de l'articulation 21 du support d'assise 20 sur le système d'articulation avant.

L'extrémité postérieure 22 du support d'assise 20 est fixée sur un autre élément de la tringlerie de la poussette, par des moyens non représentés ici. Pour permettre le repliement de la poussette, ce support d'assise 20 n'est pas un élément rigide monté pivotant sur la partie inférieure du montant de dossier 2.

Le support avant 16 et le support arrière 12 sont situés sur l'axe X-X' et s'écartent, en se déplaçant sur cet axe lors du mouvement du siège entre sa position déployée (figure 3) et sa position repliée (figure 5).

Le support avant 16 et le support arrière 12 sont par ailleurs munis de moyens d'immobilisation, non représentés. En position déployée, les moyens d'immobilisation permettent de bloquer le mouvement relatif du support arrière 12 par rapport au support avant 16 le long de l'axe X-X', et d'autre part d'empêcher leur rotation.

Lorsque les moyens d'immobilisation sont en position débloquée, le siège peut alors être déplacé de sa position déployée vers sa position repliée. Pour ce faire, le support avant 16 et le support arrière 12 sont écartés le long de l'axe X-X'. Ceci a pour effet de déformer puis d'aplatir la tringlerie articulée 1 de déploiement de dossier, la tringlerie articulée 4 de déploiement de jambe arrière 5 et la tringlerie articulée 8 de déploiement de jambe avant 9.

Ainsi, lorsque les supports avant 16 et arrière 12 sont écartés le long de l'axe X-X', l'extrémité inférieure de la jambe avant 9 bascule vers l'arrière sous l'action de la bielle avant 11, l'extrémité inférieure de la jambe arrière 5 bascule vers l'avant sous l'action de la bielle arrière 7, et le montant de dossier 2 bascule vers l'avant et vient se replier contre l'assise sous l'action de la bielle de dossier 3. En outre, la projection sur l'axe X-X' de l'extrémité 22 du support d'assise 20 s'écarte du support arrière 12.

Lors du mouvement de la poussette de sa position déployée vers sa position repliée, la jambe avant 9 et la jambe arrière 5 se croisent lors de leur mouvement. Ainsi, en position repliée, l'extrémité inférieure de la jambe avant 9 vient en vis-à-vis de l'extrémité supérieure de la jambe arrière 5 et l'extrémité inférieure de la jambe arrière 5 vient en vis-à-vis de l'extrémité supérieure de la jambe avant 9. Bien évidemment afin de permettre le croisement des jambes avant 9 et arrière 5 lors de leur mouvement, les jambes avant et arrière ne se situent pas dans un même plan latéral.

De manière avantageuse, les jambes arrière 5 s'étendent dans des plans latéraux situés entre les plans latéraux dans lesquelles s'étendent les jambes avant 9 de sorte à permettre le passage des jambes arrière 5 entre les jambes avant 9 lors du mouvement de la poussette vers sa position repliée. On note que les jambes arrière sont de préférence connectées par une traverse, s'étendant sensiblement selon l'axe de rotation des moyens de roulement et permettant de rigidifier l'ensemble. Dans ce cas, il est donc important que ce soit les jambes arrière 5 qui passent entre les jambes avant 9 lors du mouvement de la poussette entre ses positions déployée et repliée. Par ailleurs, on note également que lorsque les jambes avant 5 sont reliées par une traverse horizontale 28 formant marche pied, les jambes arrière 9 présentent alors une forme arquée de sorte à contourner la traverse horizontale 28 lorsque la poussette est en position repliée.

Lorsque la poussette est en position repliée (Figure 5), le montant de dossier 2, la jambe arrière 5, la jambe avant 9 et le support d'assise 20 sont dans une position sensiblement parallèle à l'axe X-X', et proche de celui-ci, de manière à ce que l'ensemble de la tringlerie offre un encombrement réduit. On notera que les moyens de roulement portés par les jambes avant 9 et arrière 5 sont répartis à chaque extrémité, avant et arrière, de la poussette. Le moyen de roulement de la jambe avant 9 est disposé vers l'arrière de la poussette repliée alors que le moyen de roulement de la jambe arrière 5 est disposé vers l'avant de la poussette repliée.

Par ailleurs, afin d'augmenter la compacité de la poussette en position repliée, les différentes articulations de la tringlerie seront, de préférence, agencées de façon à permettre au bord avant du support d'assise 20, et donc à l'extrémité supérieure de la jambe avant 9, de venir se replier sensiblement sur le bord supérieur du dossier 2.

Alternativement, on pourra obtenir un pliage identique de la poussette en agissant directement sur l'un des sous-ensembles de la tringlerie, par exemple en rabattant le dossier 2 vers le support rigide avant 16, en rabattant la jambe avant 9 vers l'arrière ou la jambe arrière 5 vers l'avant.

Bien évidemment, afin de permettre un tel mouvement, la jambe avant 9 et la bielle avant 11 d'une part et la jambe arrière 5 et la bielle arrière 7 d'autre part ne doivent pas s'étendre dans un même plan latéral.

Dans le mode de réalisation représenté, chacune des jambes 5, 9 est équipée d'un moyen de roulement 6, 10 disposé à l'extrémité inférieure de la jambe 5, 9 afin de constituer un pied de la poussette.

Lors d'un développement en trois dimensions, suivant un axe perpendiculaire au plan des Figures 3 et 4, on prévoira préférentiellement un doublement du montant de dossier 2, afin notamment de supporter le dossier du siège et de servir de moyen de guidage de la poussette.

De la même manière, le siège comporte deux jambes arrière 5 parallèles.

La jambe avant 9 et son moyen de roulement 10 pourront être soit uniques, afin de réaliser une poussette à trois roues, soit doublées afin de réaliser une poussette à quatre roues.

En outre, dans un mode de réalisation préféré, le siège pliable comporte deux bielles avant 11, arrière 7 et/ou de dossier 3, s'étendant de part et d'autre de l'assise et du dossier afin de renforcer la structure du siège pliable. En outre, dans un mode de réalisation, les bielles de dossier 3 permettent un maintien latéral du passager.

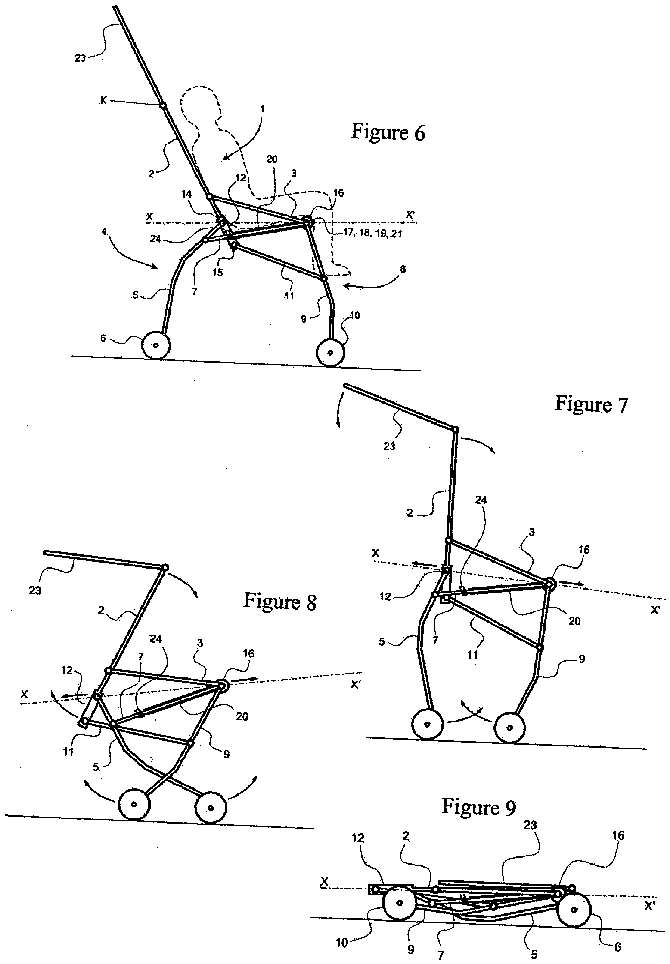

Les figures 6 à 10 illustrent une tringlerie de poussette selon un premier mode de réalisation de l'invention.

Dans ce mode de réalisation, le support rigide arrière 12 se situe dans le prolongement de la partie inférieure du montant 2 de dossier et est monté fixe par rapport audit montant 2. Comme indiqué précédemment, le support arrière 12 porte un pivot d'articulation 14 de la jambe arrière 5 et un pivot d'articulation 15 de la bielle longitudinale avant 11.

Par ailleurs, au niveau du système d'articulation avant, la bielle de dossier 3, la bielle arrière 7 et la jambe avant 9 sont montées pivotant selon un même axe perpendiculaire au plan des figures 6 à 8.

Dans ce mode de réalisation, le support d'assise 20 est confondu avec la bielle arrière 7.

En outre, on notera que, dans ce mode de réalisation, la longueur de la bielle de dossier 3 est sensiblement égale à la distance entre l'axe A et le bord supérieur du montant de dossier 2.

Le dossier 25 est monté solidaire du montant de dossier 2. L'assise 26 est montée solidaire des supports d'assise 20. À titre d'exemple, l'assise 26 et le dossier 25 peuvent être formés dans une même toile souple ou peuvent être formés par des éléments souples, rigides ou semi-rigides.

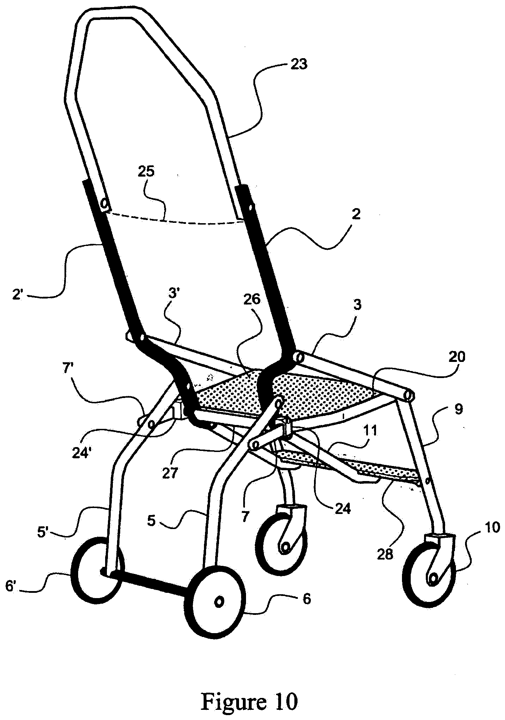

Les montants de dossier 2, 2' sont reliés par une traverse de dossier 27 (Figure 10).

La tringlerie est munie d'un ou plusieurs moyens d'immobilisation 24 permettant d'immobiliser le siège en position déployée (Figures 6 et 10). Le moyen d'immobilisation 24 est constitué par exemple par un frein à friction ou par un mécanisme à cliquet. Tel qu'illustré sur les Figures 6 à 10, le moyen d'immobilisation 24 est agencé pour bloquer la bielle arrière 7 sur l'extrémité inférieure du montant de dossier 2 portant le support arrière 12. À cet effet, le moyen d'immobilisation 24 pourra être solidaire de la bielle arrière 7 (mode de réalisation illustré) ou solidaire du support arrière 12.

D'autres modes de réalisation, non représentés, permettront d'obtenir le même résultat, par exemple avec un moyen d'immobilisation 24 bloquant la traverse de dossier 27 sur l'assise 26, ou encore le support arrière 12 sur l'assise 26.

En outre, afin de renforcer la structure de la poussette, celle-ci comprend une traverse horizontale 28 représentée sur la figure 10, connectant les jambes avant 9 et supportant un marchepied de la poussette. En vue latérale, ce marchepied est sensiblement horizontal lorsque la poussette est en position dépliée.

Avantageusement, la bielle avant 11 est connectée à ladite traverse 28. À cet effet, comme représenté sur les figures 6 à 10, le système d'articulation arrière prolonge le bas du montant de dossier 2, en dessous du support d'assise 20 lorsque le siège est en position déployée, et l'articulation 15 du dossier 2 avec la bielle avant 11 est située à l'extrémité inférieure du montant de dossier 2. Ainsi, la traverse 28 est positionnée à une hauteur satisfaisante pour supporter le marchepied.

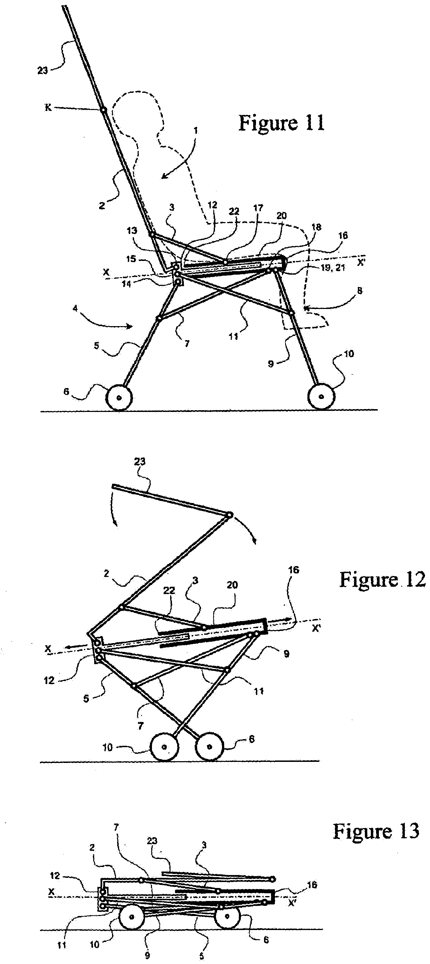

Les Figures 11 à 13 illustrent un mode de réalisation qui ne fait pas partie de l'invention.

Dans ce mode de réalisation qui ne fait pas partie de l'invention, le système d'articulation avant et le système d'articulation arrière sont respectivement supportés par un support avant 16 et un support arrière 12. Le support avant 16 comporte les pivots transversaux 17, 18, 19 d'articulation de la bielle de dossier 3, de la bielle arrière 7 et de la jambe avant 9. Le support arrière 12 comporte également les pivots transversaux 13, 14, 15 d'articulation du montant de dossier 2, de la jambe arrière 5 et de la bielle avant 11. Les supports avant 16 et arrière 12 sont montés coulissant l'un par rapport à l'autre.

Par ailleurs, dans ce mode de réalisation qui ne fait pas partie de l'invention, le support d'assise 20 est confondu avec le support avant 16.

A titre d'exemple, dans le mode de réalisation représenté qui ne fait pas partie de l'invention, les supports avant 16 et arrière 12 sont constitués par deux demi cadres montés coulissant l'un par rapport à l'autre. À cet effet, l'intérieur du support avant 16 est agencé pour former une glissière de guidage du support arrière 12.

Dans une variante avantageuse de l'invention applicable aux modes de réalisation décrits précédemment, la tringlerie pourra être équipée de moyens de rappel agencés pour permettre le pliage ou le déploiement automatique de la tringlerie. Les moyens de rappel élastique peuvent notamment être du type ressort de traction, de compression ou de torsion.

Les moyens de rappels peuvent notamment être composés d'un ou plusieurs ressorts de torsion disposé(s) au niveau d'un des axes de rotation de la tringlerie de la poussette ou un ressort de compression ou de traction entraînant le mouvement de coulissement du support avant 16 par rapport au support arrière 12, pour le second mode de réalisation.

Dans un mode de réalisation préféré, la tringlerie est également équipée d'un montant de guidage de la poussette. Comme illustré sur les Figures 6, 10 et 11, lorsque le siège est en position déployée, le montant de guidage 23 s'étend sensiblement dans le prolongement du montant de dossier 2 et permet à la personne située derrière la poussette de la guider. Le montant de guidage 23 est monté en rotation sur le montant de dossier 2, selon un axe K situé à proximité du bord supérieur dudit montant 2. L'articulation est équipée d'un moyen de blocage du montant de guidage 23 en position déployée. Avantageusement, on pourra prévoir que le moyen de blocage puisse bloquer le montant de guidage 23 dans plusieurs positions de blocage afin de s'adapter à la taille de la personne guidant la poussette.

Lors du pliage, comme illustré sur les Figures 7 à 9, 12 et 13, le montant de guidage 23 vient se replier vers l'arrière contre le montant de dossier 2. Ainsi, la longueur du siège en position repliée est sensiblement égale à celle du dossier 2.

Dans un autre mode de réalisation, non représenté, il est possible d'obtenir le même résultat avec un montant de guidage 23 monté coulissant par rapport au montant de dossier 2. Dans ce cas, des moyens d'immobilisation, tel qu'un système à cliquet, permettent de bloquer le coulissement du montant de guidage 23 par rapport au montant de dossier 2.

Ainsi, grâce à l'invention qui vient d'être décrite, il est possible de disposer d'une structure possédant une tringlerie particulièrement compacte, sa plus longue dimension une fois pliée étant sensiblement égale à la longueur du montant de dossier 2. Cette tringlerie présente en outre l'avantage d'être facilement déployable.

On notera par exemple que ce type de tringlerie peut s'adapter aisément à d'autres types de poussettes, notamment poussette double, poussette jouet pour enfant, poussette pour personne handicapée, ou autres chariots autoporteurs.

## Revendications

1. Poussette pliable, mobile entre une position déployée et une position repliée, comportant une assise, un dossier, au moins trois jambes et :
- une tringlerie arrière (4) comprenant au moins une jambe arrière (5) présentant une extrémité supérieure et une extrémité inférieure munie d'un moyen de roulement (6);
- une tringlerie avant (8) comprenant au moins une jambe avant (9) présentant une extrémité supérieure et une extrémité inférieure munie d'un moyen de roulement (10);
- une tringlerie de dossier (1) comprenant au moins un montant de dossier (2) ; et
- un support d'assise (20) comportant une extrémité avant et une extrémité arrière, et présentant une longueur inférieure à la hauteur du dossier ;
dans laquelle le support d'assise (20) n'est pas monté pivotant sur le montant de dossier (2) mais relié à un autre élément de la tringlerie de la poussette par son extrémité arrière,
ladite poussette étant **caractérisée en ce que** :
- la tringlerie avant (8), la tringlerie arrière (4), la tringlerie de dossier (1) et le support d'assise (20) sont articulés les uns par rapport aux autres et sont configurés pour assurer conjointement lors du mouvement de la poussette de sa position déployée vers sa position repliée :
- le basculement vers l'avant de l'extrémité inférieure de la jambe arrière (5) jusqu'à ce que ladite extrémité inférieure de la jambe arrière (5) vienne en vis-à-vis de l'extrémité supérieure de la jambe avant (9),
- le basculement vers l'arrière de l'extrémité inférieure de la jambe avant (9) jusqu'à ce que ladite extrémité inférieure de la jambe avant (9) vienne en vis-à-vis de l'extrémité supérieure de la jambe arrière (5), et
- le repliement du dossier contre l'assise, le bord supérieur du montant de dossier (2) venant en vis-à-vis de l'extrémité avant du support d'assise (20) et de l'extrémité supérieure de la jambe avant (9).

2. Poussette pliable selon la revendication 1, constituée de trois sous-ensembles ;
- un premier sous-ensemble comprenant la tringlerie de dossier (1) comportant le montant de dossier (2) et une bielle longitudinale de dossier (3) articulée par rapport au montant de dossier (2) selon un axe de rotation (A) transversal ;
- un second sous-ensemble comprenant la tringlerie arrière (4) comportant ladite au moins une jambe arrière (5) et une bielle longitudinale arrière (7) articulée par rapport à ladite jambe arrière (5) selon un axe de rotation (C) transversal ;
- un troisième sous-ensemble comprenant la tringlerie avant (8) comportant ladite au moins une jambe avant (9) et une bielle longitudinale avant (11) articulée par rapport à ladite jambe avant (9) selon un axe de rotation (B) transversal ;
la poussette comprenant en outre un système d'articulation arrière et un système d'articulation avant ;
- le système d'articulation arrière comportant au moins un pivot transversal (13, 14, 15) pour les articulations relatives de la jambe arrière (5) et de la bielle avant (11) par rapport au montant de dossier (2);
- le système d'articulation avant comportant au moins un pivot transversal (17, 18, 19, 21) pour les articulations relatives de la bielle de dossier (3), de la bielle arrière (7) et du support d'assise (20) par rapport à la jambe avant (9) ; et
- le pivot transversal (21) du support d'assise (20) étant situé à l'extrémité supérieure de la jambe avant (9).

3. Poussette pliable selon la revendication 2, dans laquelle le support d'assise (20) est confondu avec la ou les bielles longitudinales arrière (7).

4. Poussette pliable selon la revendication 2 ou 3, dans laquelle le système d'articulation arrière prolonge le bas du montant du dossier (2), en dessous de l'assise lorsque la poussette est en position déployée.

5. Poussette pliable selon la revendication 4, dans laquelle l'articulation (15) du montant de dossier (2) avec la ou les bielles longitudinales avant (11) est située en-dessous du support d'assise (20) lorsque la poussette est en position déployée.

6. Poussette pliable selon l'une quelconque des revendications 2 à 5, comprenant deux jambes avant (9), deux jambes arrière (5) et une traverse (28) entre les jambes avant (9) formant un marchepied, dans laquelle la ou les bielles longitudinales avant (11) sont montées pivotantes sur ladite traverse (28) entre les jambes avant (9).

7. Poussette pliable selon la revendication 6, dans laquelle les jambes arrière (5) sont arquées de manière à contourner ladite traverse (28) en position repliée.

8. Poussette pliable selon l'une quelconque des revendications 1 à 7, comprenant deux jambes arrière (5), les jambes arrière (5) étant connectées par une traverse s'étendant sensiblement selon l'axe de rotation des moyens de roulement.

9. Poussette pliable selon l'une quelconque des revendications 1 à 8, comportant deux jambes arrière (5) et deux jambes avant (9), dans laquelle les jambes arrière (5) passent entre les jambes avant (9) lors du mouvement de la poussette vers sa position repliée.

10. Poussette pliable selon l'une quelconque des revendications 1 à 9, dans laquelle un montant de guidage (23) est monté en rotation sur le montant de dossier (2) selon un axe de rotation situé à proximité du bord supérieur du montant de dossier (2), ce montant de guidage (23) s'étendant sensiblement dans le prolongement du montant de dossier (2) lorsque le siège est en position déployée et venant se replier vers l'arrière contre le montant de dossier.

11. Poussette pliable selon l'une quelconque des revendications 1 à 9, dans laquelle le dossier (2) est prolongé par un montant de guidage (23), le montant de guidage (23) étant monté coulissant par rapport au montant de dossier (2).

12. Poussette pliable selon l'une quelconque des revendications précédentes, dans laquelle le support d'assise (20) présente une longueur inférieure à 70 % de la hauteur du dossier, de préférence inférieure à 60 % de la hauteur du dossier.

13. Poussette pliable selon l'une quelconque des revendications précédentes, dans laquelle l'extrémité avant du support d'assise (20) est fixée à l'extrémité supérieure de la jambe avant (9).

14. Poussette pliable selon l'une quelconque des revendications précédentes, dans laquelle les jambes avant (9) et arrière (5) présentent une longueur sensiblement égale à la hauteur du dossier (2).

## Patentansprüche

1. Zusammenklappbarer Sportkinderwagen, der zwischen einer auseinander geklappten und einer zusammengeklappten Stellung beweglich ist, mit einem Sitz, einer Rückenlehne, mindestens drei Beinen und mit:
- einem hinteren Gestänge (4), das mindestens ein hinteres Bein (5) enthält, welches ein oberes Ende und ein mit einem Rollmittel (6) versehenes unteres Ende aufweist;
- einem vorderen Gestänge (8), das mindestens ein vorderes Bein (9) enthält, welches ein oberes Ende und ein mit einem Rollmittel (10) versehenes unteres Ende aufweist;
- einem Rücklehnengestänge (1), das mindestens einen Rückenlehnenholm (2) enthält; und
- einem Sitzflächenträger (20), der ein vorderes Ende und ein hinteres Ende aufweist und eine geringere Länge als die Höhe der Rückenlehne hat;
wobei der Sitzflächenträger (20) nicht schwenkbar an den Rückenlehnenholm (2) montiert ist, sondern mit einem anderen Element des Gestänges des Sportkinderwagens an seinem hinteren End verbunden ist;
wobei der Sportkinderwagen **dadurch gekennzeichnet ist, dass**:
- das vordere Gestänge (8), das hintere Gestänge (4), das Rücklehnengestänge (1) und der Sitzflächenträger (20) aneinander angelenkt und konfiguriert sind, um zusammen bei der Bewegung des Sportkinderwagens von seiner auseinander geklappten Stellung in seine zusammengeklappte Stellung zu gewährleisten:
- das Kippen des unteren Endes des hinteren Beins (5) nach vorne, bis das untere Ende des hinteren Beins (5) sich gegenüber dem oberen Ende des vorderen Beins (9) befindet,
- das Kippen des unteren Endes des vorderen Beins (9) nach hinten, bis das untere Ende des vorderen Beins (9) sich gegenüber dem oberen Ende der hinteren Bein (5) befindet, und
- das Zusammenklappen der Rückenlehne gegen die Sitzfläche, wobei der obere Rand des Rückenlehnenholms (2) sich gegenüber dem vorderen Ende des Sitzflächenträgers (20) und dem oberen Ende des vorderen Beins (9) anordnet.

2. Zusammenklappbarer Sportkinderwagen nach Anspruch 1, wobei er aus drei Teileinheiten besteht:
- wobei eine erste Teileinheit das Rücklehnengestänge (1) enthält, das den Rückenlehnenholm (2) und eine Rückenlehnen-Längsstange (3) aufweist, die bezüglich des Rückenlehnenholms (2) gemäß einer Querdrehachse (A) angelenkt ist;
- wobei eine zweite Teileinheit das hintere Gestänge (4) enthält, das das mindestens ein hinteres Bein (5) und eine hintere Längsstange (7) aufweist, die bezüglich des hinteren Beins (5) gemäß einer Querdrehachse (C) angelenkt ist;
- wobei eine dritte Teileinheit das vordere Gestänge (8) enthält, das das mindestens ein vorderes Bein (9) und eine vordere Längsstange (11) aufweist, die bezüglich des vorderen Beins (9) gemäß einer Querdrehachse (B) angelenkt ist;
wobei der Sportkinderwagen außerdem ein hinteres Gelenksystem und ein vorderes Gelenksystem enthält;
- wobei das hintere Gelenksystem mindestens einen Querdrehzapfen (13, 14, 15) für die Gelenkverbindungen des hinteren Beins (5) bzw. der vorderen Stange (11) mit dem Rückenlehnenholm (2) aufweist;
- das vordere Gelenksystem mindestens einen Querdrehzapfen (17, 18, 19, 21) für die Gelenkverbindungen der Rückenlehnenstange (3), der hinteren Stange (7) bzw. des Sitzflächenträgers (20) mit dem vorderen Bein (9) aufweist; und
- der Drehquerzapfen (21) des Sitzflächenträgers (20) sich am oberen Ende des vorderen Beins (9) befindet.

3. Zusammenklappbarer Sportkinderwagen nach Anspruch 2, wobei der Sitzflächenträger (20) mit der (den) hinteren Längsstange(n) (7) zusammenfällt.

4. Zusammenklappbarer Sportkinderwagen nach Anspruch 2 oder 3, wobei das hintere Gelenksystem den unteren Teil des Holms der Rückenlehne (2) unter dem Sitz verlängert, wenn der Sportkinderwagen in der auseinander geklappten Stellung ist.

5. Zusammenklappbarer Sportkinderwagen nach Anspruch 4, wobei die Gelenkverbindung (15) des Rückenlehnenholms (2) mit der (den) vorderen Längsstange(n) (11) sich unter dem Sitzflächenträger (20) befindet, wenn der Sportkinderwagen in der auseinander geklappten Stellung ist.

6. Zusammenklappbarer Sportkinderwagen nach einem der Ansprüche 2 bis 5, wobei der Sportkinderwagen zwei vordere Beine (9), zwei hintere Beine (5) und eine Querstrebe (28) zwischen den vorderen Beinen (9) aufweist, die ein Trittbrett formt, wobei die vorderen Längsstange(n) (11) auf die Querstrebe (28) zwischen den vorderen Beinen (9) schwenkbar montiert ist(sind).

7. Zusammenklappbarer Sportkinderwagen nach Anspruch 6, wobei die hinteren Beine (5) gewölbt sind um um die Querstrebe (28) in der zusammengeklappten Stellung herumzugehen.

8. Zusammenklappbarer Sportkinderwagen nach einem der Ansprüche 1 bis 7, wobei der Sportkinderwagen zwei hintere Beine (5) aufweist, wobei die hinteren Beine (5) mit einer Querstrebe verbunden sind, die sich im wesentlichen entlang der Rotationsachse der Rollenmitteln erstreckt.

9. Zusammenklappbarer Sportkinderwagen nach einem der Ansprüche 1 bis 8, wobei der Sportkinderwagen zwei hintere Beine (5) und zwei vordere Beine (9) aufweist, wobei die hinteren Beine (5) zwischen den vorderen Beinen (9) hindurchgehen, wenn sich der Sportkinderwagen in die zusammengeklappte Stellung bewegt.

10. Zusammenklappbarer Sportkinderwagen nach einem der Ansprüche 1 bis 9, wobei ein Führungsholm (23) auf dem Rückenlehnenholm (2) entlang einer Drehachse drehbar montiert ist, die nahe der oberen Kante des Rückenlehnenholms (2) angeordnet ist, wobei sich dieser Führungsholm (23) im wesentlichen in der Verlängerung des Rückenlehnenholms (2) erstreckt, wenn der Sitz in der entfalteten Stellung ist, und nach hinten gegen den Rückenlehnenholm zusammenklappt.

11. Zusammenklappbarer Sportkinderwagen nach einem der Ansprüche 1 bis 9, wobei die Rückenlehne (2) von einem Führungsholm (23) verlängert ist, wobei der Führungsholm (23) bezüglich des Rückenlehnenholms (2) verschiebbar montiert ist.

12. Zusammenklappbarer Sportkinderwagen nach einem der vorhergehenden Ansprüche, wobei der Sitzflächenträger (20) eine Länge von weniger als 70% der Höhe der Rückenlehne, vorzugsweise von weniger als 60% der Höhe der Rückenlehne aufweist.

13. Zusammenklappbarer Sportkinderwagen nach einem der vorhergehenden Ansprüche, wobei das vordere Ende des Sitzflächenträgers (20) am oberen Ende des vorderen Beins (9) befestigt ist.

14. Zusammenklappbarer Sportkinderwagen nach einem der vorhergehenden Ansprüche, wobei die vorderen Beine (9) und die hinteren Beine (5) im wesentlichen die gleiche Länge wie die Länge der Rücklehne (2) aufweisen.

## Claims

1. A foldable stroller, mobile from an unfolded position to a folded position, and comprising a seat portion, a backrest, at least three legs, and:
- a rear linkage (4) including at least one rear leg (5) having an upper end and a lower end mounted with a wheeled means (6);
- a front linkage (8) including at least one front leg (9) having an upper end and a lower end mounted with a wheeled means (10);
- a backrest linkage (1) including at least one backrest mount (2); and
- a seat support (20) including a front end and a rear end, and having a length shorter than the height of the backrest;
wherein the seat support (20) is not pivotally mounted on the backrest mount (2) but linked to another part of the stroller linkage via its rear end;
said stroller being **characterized in that**:
- the front linkage (8), the rear linkage (4), the backrest linkage (1) and the seat support (20) are articulated one to another and configured so as to ensure simultaneously when the stroller is moved from its unfolded position to its folded position:
- the forward hinging of the lower end of the rear leg (5) until said lower end of the rear leg (5) reaches a position next to the upper end of the front leg (9),
- the backward hinging of the lower end of the front leg (9) until said lower end of the front leg (9) reaches a position next to the upper end of the rear leg (5), and
- the folding of the backrest against the seat portion, the upper edge of the backrest mount (2) reaching a position next to the front end of the seat support (20) and to the upper end of the front leg (9).

2. A foldable stroller according to claim 1 comprising three sub-assemblies:
- a first sub-assembly comprising the backrest linkage (1) including the backrest mount (2) and a backrest longitudinal rod (3) hinged to said backrest mount (2) around a transverse rotation axis (A);
- a second sub-assembly comprising a rear linkage (4) including the at least one rear leg (5) and a rear longitudinal rod (7) hinged to said rear leg (5) around a transverse rotation axis (C);
- a third sub-assembly comprising a front linkage (8) including the at least one front leg (9) and a front longitudinal rod (11) hinged to said front leg (9) around a transverse rotation axis (B).
the stroller further comprising a rear hinge body and a front hinge body;
- the rear hinge body comprising at least one transversal hinge (13, 14, 15) for the pivoting of the rear leg (5) and of the front rod (11) relatively to the backrest mount (2);
- the front hinge body comprising at least one transversal hinge (17, 18, 19, 21) for the pivoting of the backrest rod (3), of the rear rod (7) and of the seat support (20) relatively to the front leg (9); and
- the transversal hinge (21) of the seat support (20) being located at the upper end of the front leg (9).

3. A foldable stroller according to claim 2, wherein the seat support (20) is merged with the rear longitudinal rod(s) (7).

4. A foldable stroller according to claim 2 or 3, wherein the rear hinge body extends the lower portion of the backrest mount (2), below the seat portion when the stroller is in unfolded position.

5. A foldable stroller according to claim 4, wherein the hinge (15) of the backrest mount (2) with said front longitudinal rod(s) (11) is located below the seat support (20) when the stroller is in unfolded position.

6. A foldable stroller according to any one of claims 2 to 5, comprising two front legs (9), two rear legs (5) and a cross member (28) between the front legs (9) forming a footrest, wherein the front longitudinal rod(s) (11) are pivotally mounted on the cross member (28) between the front legs (9).

7. A foldable stroller according to claim 6, wherein the rear legs (5) are bent so as to go round the cross member (28) in the folded position.

8. A foldable stroller according to any one of claims 1 to 7, comprising two rear legs (5), the rear legs (5) being connected by a cross member extending substantially along the rotation axis of the wheels.

9. A foldable stroller according to any one of claims 1 to 8, comprising two rear legs (5) and two front legs (9), wherein the rear legs (5) go between the front legs (9) when the stroller is moved to its folded position.

10. A foldable stroller according to any one of claims 1 to 9, wherein a guiding mount (23) is pivotally mounted on the backrest mount (2) around a rotation axis located close to the upper edge of the backrest mount (2), the guiding mount (23) extending substantially in the continuity of the backrest mount (2) when the seat is in the unfolded position and folding backwards against the backrest mount.

11. A foldable stroller according to any one of claims 1 to 9, wherein the backrest (2) is extended by a guiding mount (23), the guiding mount (23) being slidably mounted relative to the backrest mount (2).

12. A foldable stroller according to any one of the preceding claims, wherein the length of the seat support (20) is less than 70% of the backrest height, preferably less than 60% of the backrest height.

13. A foldable stroller according to any one of the preceding claims, wherein the front end of the seat support (20) is connected to the upper end of the front leg (9) .

14. A foldable stroller according to any one of the preceding claims, wherein the front legs (9) and the rear legs (5) have a length substantially equal to the backrest (2) height.
